(19) Europäisches Patentamt
European Patent Office
Office européen des brevets

(11) **EP 1 107 416 B1**

(12) **FASCICULE DE BREVET EUROPEEN**

(45) Date de publication et mention
de la délivrance du brevet:
**23.12.2009 Bulletin 2009/52**

(51) Int Cl.:
***H02H 6/00*** *(2006.01)*

(21) Numéro de dépôt: **00410139.0**

(22) Date de dépôt: **03.11.2000**

(54) **Relais de protection thermique**

Thermisches Schutzrelais

Thermal protection relay

(84) Etats contractants désignés:
**DE ES GB IT SE**

(30) Priorité: **06.12.1999 FR 9915315**

(43) Date de publication de la demande:
**13.06.2001 Bulletin 2001/24**

(73) Titulaire: **Schneider Electric Industries SAS
92500 Rueil-Malmaison (FR)**

(72) Inventeur: **Gotzig, Bernhard,
Schneider Electric Ind. SA
38050 Grenoble cedex 09 (FR)**

(74) Mandataire: **Tripodi, Paul et al
Schneider Electric Industries SAS
Service Propriété Industrielle
World Trade Center / 38EE1
5 Place Robert Schuman
38050 Grenoble Cedex 09 (FR)**

(56) Documents cités:
**EP-A- 0 866 485    EP-A- 0 869 597
WO-A-97/04511**

**Description**

L'invention relève du domaine des relais de protection thermique destinés à protéger un appareil électrique. La demande de brevet européen EP 0 866 485 décrit un dispositif de protection d'un moteur relevant de ce domaine.

L'invention concerne un relais de protection thermique destiné à protéger un appareil électrique, comportant des moyens de mesure d'un courant absorbé par l'appareil, des moyens de détermination d'une valeur représentative de l'image thermique de l'appareil en fonction de la valeur du courant mesuré, d'une valeur antérieure de l'image thermique et d'au moins une constante de temps prédéterminée, des moyens de détermination d'au moins un seuil de protection, des moyens de comparaison de la valeur représentative de l'image thermique avec le seuil de protection et des moyens de production d'un signal d'alarme et/ou de déclenchement lorsque la valeur représentative de l'image thermique excède le seuil de protection.

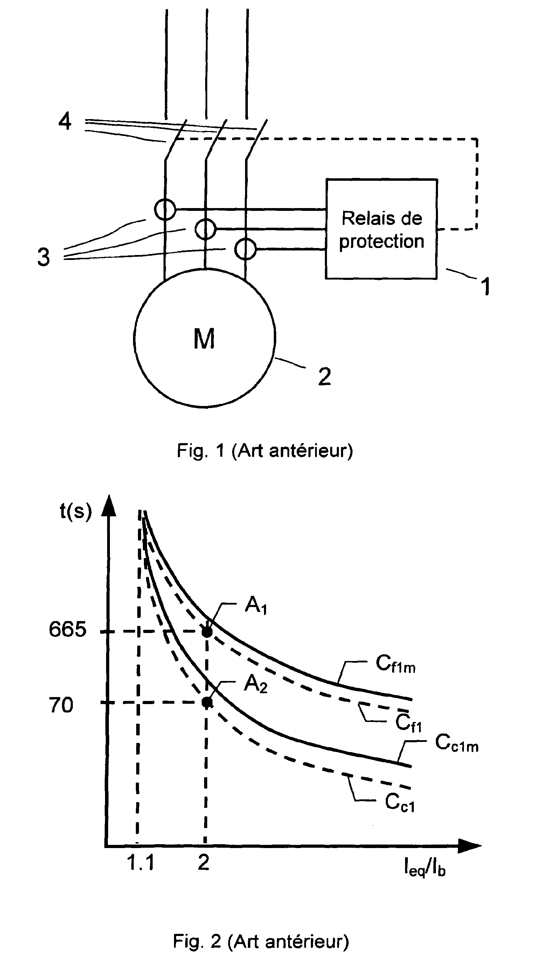

Un tel relais 1 peut être utilisé pour la protection d'un moteur 2 (figure 1), d'un transformateur, d'une ligne électrique ou d'un banc de condensateurs. Comme représenté à la figure 1, des capteurs de courant 3 fournissent au relais 1 des signaux représentatifs du courant absorbé par le moteur 2. Le relais 1 calcule, à partir des courants mesurés, une valeur représentative de l'image thermique du moteur 2, c'est à dire représentative de l'échauffement du moteur. En cas d'échauffement trop important, dû par exemple à une surcharge et dépassant respectivement un seuil d'alarme $E_{sa}$ ou de déclenchement $E_{sd}$, le relais 1 fournit un signal d'alarme ou de déclenchement. Le signal de déclenchement provoque l'ouverture de contacts 4 et l'interruption de l'alimentation du moteur 2.

De manière classique, une valeur $E_k$ de l'image thermique est calculée, à un instant t , selon l'équation :

$$E_k = E_{k-1} + \left(\frac{I_{eq}}{I_b}\right)^2 \cdot \frac{\Delta t}{\tau} - E_{k-1} \cdot \frac{\Delta t}{\tau} \qquad (1)$$

dans laquelle :

$E_{k-1}$ est la valeur antérieure de l'image thermique, calculée à l'instant $(t-\Delta t)$.

$I_{eq}$ est un courant équivalent, représentatif du courant absorbé par le moteur et déterminé à partir des courants mesurés.

$I_b$ est le courant de base de l'appareil, c'est à dire le courant absorbé par l'appareil en fonctionnement nominal.

$\tau$ est la constante de temps de l'appareil à protéger. Classiquement, la constante de temps $\tau$ peut prendre deux valeurs distinctes, une constante de temps d'échauffement $\tau_1$ lorsque le moteur est en marche et une constante de temps de refroidissement $\tau_2$, fournie par le fabricant, lorsque le moteur est à l'arrêt.

De manière connue, le courant équivalent $I_{eq}$ est calculé à partir des courants mesurés selon l'équation :

$$I_{eq}^2 = I^2 + K I_{inv}^2 \qquad (2)$$

dans laquelle :

I est le plus grand des courants efficaces (RMS) mesurés circulant dans des conducteurs de phase alimentant l'appareil
$I_{inv}$ est le courant inverse mesuré
K est un coefficient réglable.

Comme représenté à la figure 2 on peut ainsi définir des courbes de déclenchement temps/courant du relais à froid $C_{f1}$ et à chaud $C_{c1}$ (en pointillés).

La courbe de déclenchement à froid $C_{f1}$ définit le temps de déclenchement du relais de protection à partir d'un échauffement nul, conformément à l'équation :

$$\frac{t}{\tau} = \log \frac{\left(\dfrac{Ieq}{I_b}\right)^2}{\left(\dfrac{Ieq}{I_b}\right)^2 - E_{sd}} \qquad\qquad (3)$$

dans laquelle $E_{sd}$ est le seuil de déclenchement.

La courbe de déclenchement à chaud $C_{c1}$ définit le temps de déclenchement de la protection à partir d'un échauffement nominal E=1, conformément à l'équation :

$$\frac{t}{\tau} = \log\left(\frac{\left(\dfrac{Ieq}{I_b}\right)^2 - 1}{\left(\dfrac{Ieq}{I_b}\right)^2 - E_{sd}}\right) \qquad\qquad (4)$$

Pour un courant prédéterminé, supérieur à un courant maximal en régime établi, le temps de déclenchement à partir d'un état froid du moteur à protéger est supérieur à celui obtenu à partir d'un état chaud du moteur.

A titre d'exemple, sur la figure 2, pour un courant $I_{eq}/I_b$=2, le temps de déclenchement du relais est de 665s à froid (point $A_1$) et de 70s à chaud (point $A_2$).

Les fabricants fournissent généralement des courbes de tenue thermique expérimentales de l'appareil, à chaud et à froid. Sur la figure 2, les courbes à chaud $C_{c1m}$ et à froid $C_{f1m}$ du moteur (en traits pleins) sont décalées vers le haut par rapport aux courbes associées $C_{c1}$ et $C_{f1}$ du relais. La protection du moteur correspondant est donc correctement assurée par le relais.

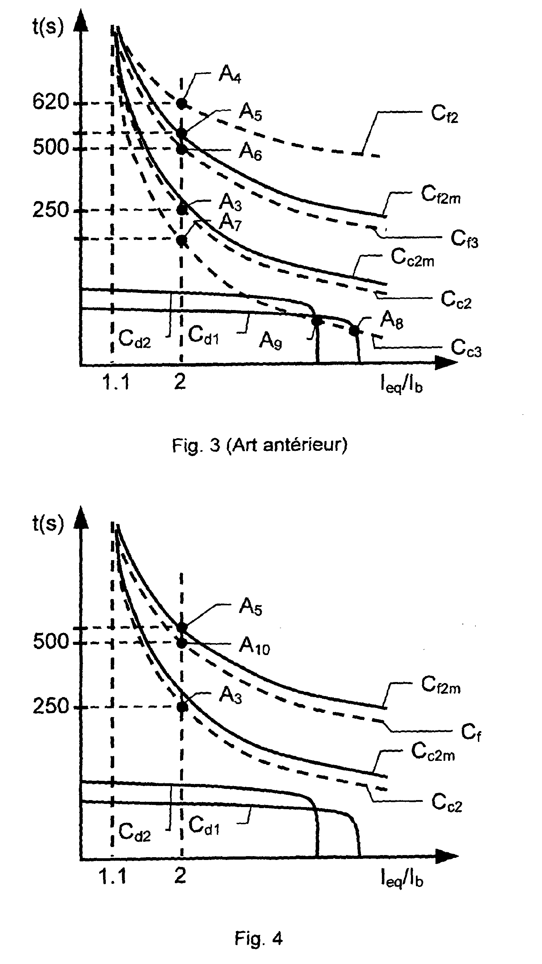

Cependant, il arrive que les courbes de tenue thermique à chaud et à froid du moteur ($C_{c2m}$ et $C_{f2m}$) soient beaucoup plus rapprochées que celles du relais ($C_{c2}$ et $C_{f2}$), comme représenté à la figure 3. Dans l'exemple représenté à la figure 3, pour un courant $I_{eq}/I_b$=2, le temps de tenue thermique à chaud du relais est de 250s (point $A_3$), comme précédemment inférieur au temps de tenue thermique correspondant du moteur. Cependant, le temps de déclenchement à froid du relais est de 620s (point $A_4$), supérieur au temps de tenue thermique à froid (point $A_5$) du moteur. Le moteur n'est donc pas protégé correctement lorsqu'il subit une surcharge à partir d'un état froid, bien que le déclenchement à partir d'un état chaud reste assuré dans le temps nécessaire.

En abaissant la constante de temps d'échauffement $\tau_1$ du relais on peut décaler les deux courbes de déclenchement du relais vers le bas. Les nouvelles courbes à chaud $C_{c3}$ et à froid $C_{f3}$ ainsi obtenues sont alors toutes les deux situées au-dessous des courbes associées du moteur ($C_{c2m}$ et $C_{f2m}$). Le nouveau temps de tenue thermique à froid (point $A_6$) est alors inférieur au temps de tenue thermique à froid du moteur (point $A_5$). Il en va de même du temps de tenue thermique à chaud (points $A_7$ et $A_3$).

Cependant, l'abaissement de la courbe de déclenchement à chaud du relais peut poser des problèmes au démarrage. En effet, la courbe de déclenchement à chaud $C_{c3}$ du relais peut, comme représenté à la figure 3, croiser la courbe de démarrage du moteur. Sur la figure 3, deux courbes de démarrage $C_{d1}$ et $C_{d2}$ sont représentées. Chacune de ces courbes représente la valeur du courant, en fonction du temps, au démarrage du moteur, respectivement pour un démarrage sous tension nominale $U_n$ ($C_{d1}$) et pour un démarrage sous une tension de $0,9U_n$ ($C_{d2}$).

La courbe de déclenchement à chaud $C_{c3}$ coupe la courbe de démarrage $C_{d1}$ au point $A_8$ et la courbe de démarrage $C_{d2}$ au point $A_9$. Ainsi, en cas de démarrage à chaud, la valeur du courant est telle qu'elle provoque immédiatement un déclenchement, empêchant ainsi tout démarrage à chaud.

L'invention a pour but de remédier à ces inconvénients et de permettre en toutes circonstances une bonne protection thermique de l'appareil.

Selon l'invention, ce but est atteint par le fait qu'une image thermique initiale non nulle est prise en compte pour la détermination de l'image thermique, la valeur de l'image thermique initiale étant déterminée à partir de courbes de tenue thermique expérimentales de l'appareil.

Selon un développement de l'invention, le seuil de protection étant un seuil de déclenchement, le temps de déclenchement à froid t du relais est donné par l'équation :

$$\frac{t}{\tau} = \log \frac{\left( \left( \frac{I_{eq}}{I_b} \right)^2 - E_{s0} \right)}{\left( \left( \frac{I_{eq}}{I_b} \right)^2 - E_{sd} \right)} \qquad (5)$$

dans laquelle :

$\tau$ est la constante de temps du relais

$I_b$ est le courant de base de l'appareil

$I_{eq}$ est un courant équivalent représentatif du courant mesuré

$E_{s0}$ est l'image thermique initiale

$E_{sd}$ est le seuil de déclenchement

L'image thermique initiale $E_{s0}$ est de préférence déterminée selon l'équation :

$$E_{s0} = \left( \frac{I_r}{I_b} \right)^2 - e^{\frac{t_r}{\tau_1}} \bullet \left[ \left( \frac{I_r}{I_b} \right)^2 - E_{sd} \right] \qquad (6)$$

dans laquelle :

Ib est le courant de base de l'appareil
Ir est un courant de réglage prédéterminé
tr est un temps de déclenchement à froid désiré associé au courant de réglage Ir.
$\tau_1$ est une constante de temps d'échauffement, déterminée à partir d'une courbe de tenue

thermique à chaud expérimentale de l'appareil.
Le relais peut, de plus, comporter des moyens de mesure de la température ambiante et des moyens de correction de la valeur représentative de l'image thermique en fonction de la température ambiante mesurée.
Selon un autre développement de l'invention, dans le cas d'un moteur, les constantes de temps, le seuil d'alarme et/ou de déclenchement et l'image thermique initiale constituant un jeu de paramètres du relais, le relais comporte des moyens de comparaison du courant mesuré et d'un seuil de courant représentatif d'un état bloqué du rotor du moteur et des moyens de sélection d'un premier jeu de paramètres lorsque le courant mesuré est inférieur au seuil de courant et d'un second jeu de paramètres lorsque le courant mesuré est supérieur au seuil de courant.
D'autres avantages et caractéristiques ressortiront plus clairement de l'exposé qui va suivre de modes de réalisation particuliers de l'invention, donnés à titre d'exemples non limitatifs et représentés aux dessins annexés sur lesquels :
La figure 1 représente, de façon très schématique, un relais de protection thermique d'un moteur selon l'art antérieur, dans lequel l'invention peut être mise en oeuvre.
Les figures 2 et 3 représentent les courbes de tenue thermique temps/courant d'un moteur et d'un relais selon l'art antérieur, la figure 3 représentant en outre les courbes de démarrage du moteur.
La figure 4 représente les courbes de démarrage d'un moteur ainsi que les courbes de tenue thermique du moteur et d'un relais selon l'invention.

La figure 5 représente les variations, en fonctions du temps, de l'image thermique E en cas de surcharge, respectivement selon l'art antérieur et selon l'invention.

Les figures 6 et 7 représentent un mode de réalisation particulier d'un organigramme pouvant être mis en oeuvre dans un relais selon l'invention.

La figure 8 représente les courbes de tenue thermique d'un moteur, en fonctionnement normal et rotor bloqué, ainsi que les courbes de démarrage du moteur.

Dans le mode de réalisation de l'invention représenté à la figure 4, les courbes de tenue thermique $C_{f2m}$ et $C_{c2m}$ du moteur, ainsi que les courbes de démarrage $C_{d1}$ et $C_{d2}$ du moteur sont identiques à celles de la figure 3. La courbe de déclenchement à chaud du relais $C_{c2}$ qui ne coupe pas les courbes de démarrage $C_{d1}$ et $C_{d2}$ du moteur, reste également inchangée. Par contre, la courbe de déclenchement à froid du relais $C_f$ est modifiée, de manière à passer en dessous de la courbe $C_{f2m}$ de tenue thermique à froid du moteur. A titre d'exemple, pour $I_{eq}/I_b=2$, le point $A_3$ est inchangé et le point $A_{10}$ de la courbe à froid $C_f$ du relais est au-dessous du point $A_5$ de la courbe à froid $C_{f2m}$ du moteur.

Ce résultat est obtenu par la prise en compte, lors du calcul de la valeur E représentative de l'image thermique, d'une image thermique initiale non nulle $E_{s0}$.

L'équation (3) donnant le temps de déclenchement à froid du relais est modifiée et remplacée par l'équation (5). Si $E_{s0}=0$, on retrouve l'équation (3) classique de la courbe de déclenchement à froid. Par contre, si $E_{s0}=1$ on retrouve l'équation (4) classique de la courbe de déclenchement à chaud.

La valeur de l'image thermique initiale $E_{s0}$ est déterminée à partir de courbes de tenue thermique expérimentales de l'appareil. Cette valeur est comprise entre 0 et 1.

A titre d'exemple, en se basant sur les courbes des figures 3 et 4, la valeur de l'image thermique initiale EST peut être déterminée de la manière suivante. La constante de temps de refroidissement $\tau_2$ du moteur étant connue, on dispose, en outre, de courbes expérimentales à chaud $C_{c2m}$ et à froid $C_{f2m}$ du moteur et du courant maximal $I_{max}$ en régime établi. A titre d'exemple, si $I_{max}/I_b=1,1$ on règle en conséquence le seuil de déclenchement $E_{sd}$ tel que $E_{sd}=(I_{max}/I_b)^2$ soit $E_{sd}=1,2$. Un seuil d'alarme $E_{sa}$ peut être fixé à 0,9 par exemple. Pour déterminer la constante de temps d'échauffement $\tau_1$ du relais on peut utiliser l'équation (4) correspondant à la courbe à chaud $C_{c2}$ du relais, dans laquelle le courant équivalent $I_{eq}$ est remplacé par un courant de réglage $I_r$ prédéterminé. On obtient ainsi une valeur $t_c/\tau_1$, dans laquelle $t_c$ est le temps de déclenchement à chaud désiré associé au courant de réglage $I_r$. En pratique, on utilise de préférence des tables contenant les valeurs numériques de la courbe à chaud du relais. A titre d'exemple, pour $E_{sd}=1,2$ et $I_r/I_b=2$ on obtient $t_c/\tau_1 =0 ,069$.

Dans le mode de représentation de la figure 4, pour que le déclenchement ait lieu au point $A_3$ pour lequel $I_r/I_b=2$ et $t_c=250s$, compatible avec la tenue thermique à chaud du moteur (courbe $C_{c2m}$), on peut alors régler la constante de temps $\tau_1$ à 29 minutes, correspondant à la courbe $C_{c2}$ de la figure 4.

En utilisant l'équation (3) avec $\tau=\tau_1 =29$ minutes, $I_{eq}/I_b=I_r/I_b=2$ et $E_{sd}=1,2$, ou des tables correspondant à la courbe à froid $C_{f2}$ du relais, on obtient le temps de déclenchement à froid $t_f$ correspondant : $t_f/\tau_1)=0,3567$, soit pour $\tau_1 = 29$ min, $t_f=620s$, correspondant au point $A_4$ de la courbe $C_{f2}$ de la figure 3. Dans ce cas particulier, le point $A_4$ est situé au-dessus du point $A_5$ correspondant de la courbe à froid expérimentale $C_{f2m}$ du moteur, ce qui ne permet pas une protection correcte du moteur.

Pour cela, on modifie la courbe à froid du relais, en introduisant une image thermique initiale EST telle que le temps de déclenchement à froid $t_r$ désiré associé au courant de réglage $I_r$ soit inférieur au temps de déclenchement associé au point $A_5$ de la courbe à froid $C_{f2m}$ du moteur. A titre d'exemple $t_r=500s$, correspondant à un point $A_{10}$ situé au-dessous du point $A_5$ pour $I_r/I_b=2$ (fig. 4).

Le calcul de EST est effectué à partir de l'équation (6), qui se déduit de l'équation (5) dans laquelle $t=t_r$, $\tau=\tau_1$ et $I_{eq}=I_r$. Dans l'exemple précité, avec $t_r=500s$, $I_r/I_b=2$, $\tau_1 =29$ minutes et $Esd=1,2$, on obtient $E_{so}=0,27$. La courbe à froid $C_{f2}$ du relais (fig. 3) est ainsi déplacée vers le bas pour donner la courbe à froid $C_f$ (fig. 4) compatible avec la tenue thermique du moteur, tandis que la courbe à chaud $C_{c2}$ du relais, elle même compatible avec la tenue thermique du moteur n'est pas modifiée.

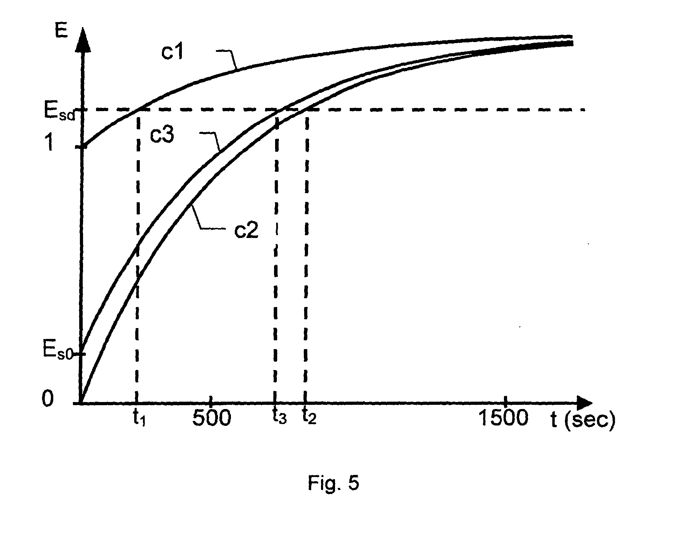

Sur la figure 5 sont représentées les variations de l'image thermique E en fonction du temps, conformément à l'équation (1) en cas de surcharge de l'appareil, le moteur 2 par exemple. Il est à noter qu'en cas de fonctionnement normal de l'appareil, sans surcharge, l'image thermique est limitée à sa valeur nominale 1. Dans un relais selon l'art antérieur, les variations de l'image thermique sont représentées par les courbes cl, partant de 1, si la mise en route de l'appareil se fait à chaud et c2 partant de 0 si la mise en route de l'appareil se fait à froid. Les temps de déclenchement correspondants, respectivement à chaud et à froid, sont indiqués en $t_1$ et $t_2$. L'introduction de l'image thermique initiale $E_{s0}$ modifie la courbe obtenue à partir d'un état froid, qui devient la courbe c3. Le temps de déclenchement à froid devient alors le temps $t_3$, inférieur au temps $t_2$, tandis que le temps de déclenchement à chaud, $t_1$ n'est pas modifié.

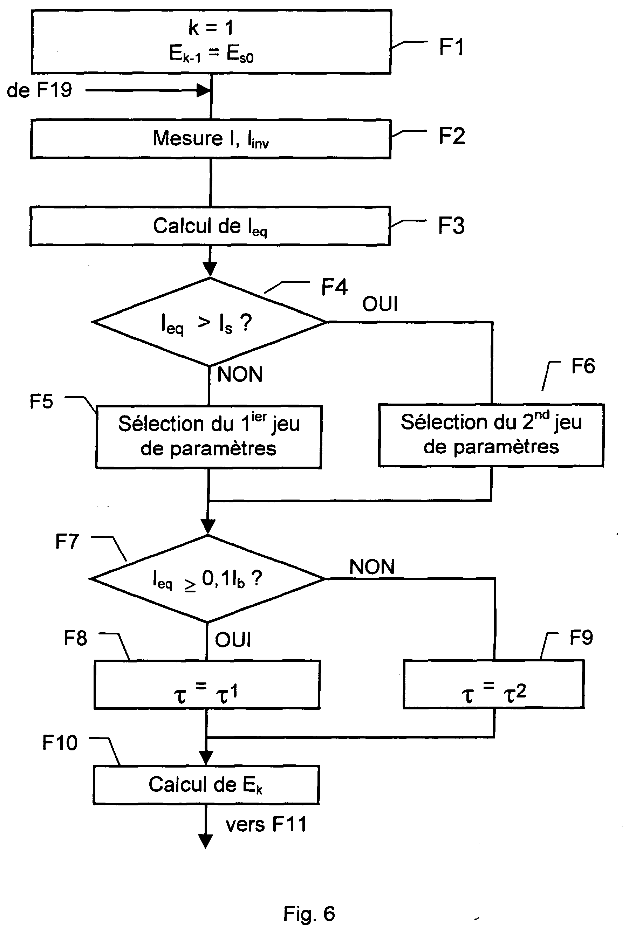

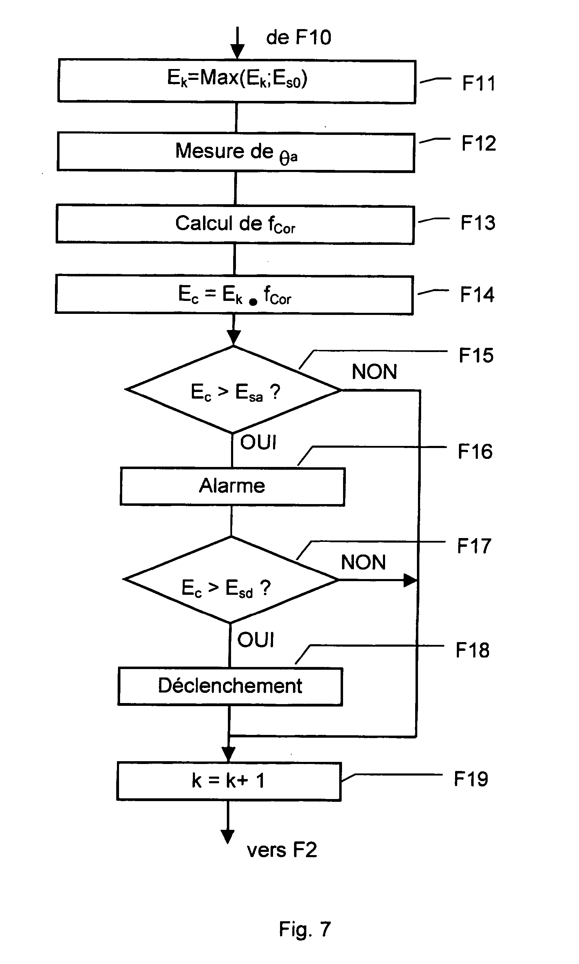

Le relais de protection 1 est de préférence un relais à microprocesseur dans lequel l'invention peut être mise en oeuvre au moyen d'un organigramme tel que décrit ci-dessous en référence aux figures 6 et 7.

Dans une première étape F1 d'initialisation, l'indice k est mis à 1 et la valeur antérieure de l'image thermique

$E_{k-1}$ prend la valeur EST, la valeur EST ayant préalablement été déterminée comme indiqué ci-dessus à partir des courbes de déclenchement expérimentales de l'appareil. Puis, dans une étape F2, les courants I et $I_{inv}$ sont mesurés. Le courant équivalent $I_{eq}$ est ensuite calculé (étape F3) conformément à l'équation (2). Dans le cas d'un moteur, le courant équivalent est ensuite comparé à un seuil de courant $I_s$ représentatif d'un état bloqué du rotor du moteur. Si le courant équivalent $I_{eq}$ n'est pas supérieur à $I_s$ (sortie NON de F4), le relais sélectionne (étape F5) un premier jeu de paramètres $\tau_1$, $\tau_2$ seuils d'alarme $E_{sa}$ et de déclenchement $E_{sd}$, et image thermique initiale $E_{s0}$, déterminés de la manière indiquée ci dessus pour tenir compte des courbes à froid $C_{f2m}$ et à chaud $C_{c2m}$ du moteur. Si le courant équivalent $I_{eq}$ est supérieur à $I_s$ (sortie OUI de F4), le rotor du moteur est considéré par le relais comme étant bloqué et le relais sélectionne (étape F6) un second jeu de paramètres.

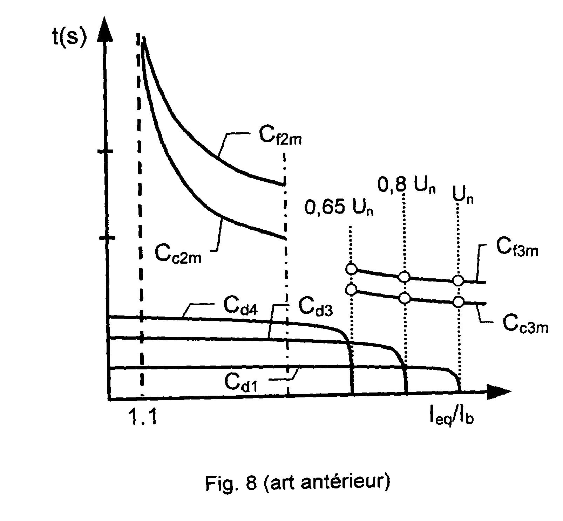

En effet, lorsque le rotor d'un moteur est bloqué, son comportement thermique est très différent de celui qu'il a sous charge nominale. Dans ces conditions, le moteur peut être endommagé par une surchauffe soit du rotor soit du stator. Pour des moteurs de grande puissance, c'est souvent le rotor qui constitue le facteur limitant. Les paramètres choisis pour le fonctionnement normal du moteur (premier jeu de paramètres) ne sont plus valables. Parfois, le fabricant fournit des courbes à froid $C_{f3m}$ et à chaud $C_{c3m}$ (figure 8) du moteur lorsque le rotor est bloqué. Chaque courbe est formée, pour différentes tensions au démarrage du moteur, respectivement $U_n$, $0,8U_n$ et $0,65_n$ sur la figure 8. L'évolution correspondante du courant au démarrage est représentée à la figure 8 par les courbes de démarrage $C_{d1}$ à Un, $C_{d3}$ à $0,8U_n$ et $C_{d4}$ à $0,65U_n$. Un second jeu de paramètres peut être déterminé, de manière analogue au premier jeu, en prenant en compte les courbes $C_{c3m}$ et $C_{f3m}$. On obtient ainsi de secondes valeurs des différents paramètres ($\tau_1$, $\tau_2$, $E_{sa}$, $E_{sd}$ et $E_{s0}$) qui sont pris en compte à l'étape F6 dans l'organigramme de la figure 6. La valeur du courant de seuil $I_s$ est de préférence égale à 80% du courant de démarrage.

Après les étapes F5 ou F6, le relais passe à une étape F7 dans laquelle le courant équivalent $I_{eq}$ est comparé à un autre seuil de courant, très faible, par exemple $0,11_b$. Si le courant équivalent est supérieur ou égal à cet autre seuil de courant (sortie OUI de F7), le moteur est considéré comme étant en marche et, dans une étape F8, la constante d'échauffement $\tau_1$ précédemment sélectionnée est affectée à la constante de temps $\tau$. Par contre, si le courant équivalent $I_{eq}$ est inférieur à cet autre seuil de courant (sortie NON de F7), il est considéré comme nul et le moteur est considéré comme étant à l'arrêt. La constante de temps de refroidissement $\tau_2$ est alors utilisée (étape F9) comme contante de temps $\tau$. Une nouvelle valeur $E_k$ de l'image thermique est ensuite calculée, dans une étape F10, conformément à l'équation (1). Ensuite, dans une étape F11 (Fig. 7), la valeur de $E_k$ est remplacée par la plus grande des valeurs $E_k$ et Est. Ainsi la valeur $E_k$ ne peut jamais être inférieure à l'image thermique initiale Est, même après une longue période d'arrêt du moteur.

Dans un mode de réalisation préférentiel, une correction de l'image thermique est ensuite réalisée en fonction de la température ambiante (étapes F12 à F14). Pour cela, le relais comporte une sonde de mesure de température, fournissant (étape F12) une valeur $\theta_a$ représentative de la température ambiante. La température maximale $\theta_{max}$ des conducteurs de l'appareil à protéger étant connue, un facteur de correction $f_{cor}$ est calculé (étape F13) tel que :

$$f_{cor} = \frac{\theta_{max} - 40°C}{\theta_{max} - \theta_n} \tag{7}$$

et

$$f_{cor} \geq 1$$

Le facteur de correction est ensuite appliqué à la valeur de l'image thermique $E_k$ pour fournir (étape F14) une image thermique corrigée $E_c$ telle que : $E_c = E_k \cdot f_{cor}$. Les étapes F12 à F14 correspondent ainsi à une correction de la valeur de l'image thermique en fonction de la température ambiante. A titre d'exemple, la température maximale $\theta_{max}$ peut être de 160°C. Si la température ambiante $\theta_a$ est de 50°C, le facteur de correction $f_{cor}$=120/110, supérieur à 1. Le facteur de correction augmente ainsi la valeur de l'image thermique lorsque la température ambiante excède une limite de température prédéterminée, 40°C dans l'exemple décrit, sans la modifier tant que la température ambiante reste inférieure à cette limite de température.

La valeur de l'image thermique corrigée $E_c$ est ensuite comparée au seuil d'alarme $E_{sa}$ (étape F15). Si $E_c$ est supérieure au seuil d'alarme $E_{sa}$ (sortie OUI de l'étape F15), une alarme est déclenchée (étape F16), puis $E_c$ est comparée au seuil de déclenchement $E_{sd}$ (étape F17). Si le seuil de déclenchement est dépassé (sortie OUI de F17), un signal de déclenchement est produit, provoquant l'interruption de l'alimentation de l'appareil. Lorsque les seuils d'alarme ou de déclenchement ne sont pas dépassés (sortie NON de F15 ou de F17), ainsi qu'après l'étape F18 de déclenchement, le relais passe à une étape F19, dans laquelle l'indice k est incrémenté (k=k+1), avant de revenir à l'étape F2 pour le calcul d'une nouvelle valeur de l'image thermique tenant compte de la valeur $E_{k-1}$ calculée précédemment qui est gardée en mémoire.

**Revendications**

1. Relais de protection thermique (1) destiné à protéger un appareil électrique (2), comportant des moyens (3) de mesure d'un courant absorbé par l'appareil, des moyens de détermination d'une valeur ($E_k$) représentative de l'image thermique de l'appareil en fonction de la valeur ($I_{eq}$) du courant mesuré, d'une valeur antérieure ($E_{k-1}$) de l'image thermique et d'au moins une constante de temps ($\tau_1$, $\tau_2$) prédéterminée, des moyens (F5, F6) de détermination d'au moins un seuil de protection ($E_{sa}$, $E_{sd}$), des moyens (F 15, F17) de comparaison de la valeur ($E_k$) représentative de l'image thermique avec le seuil de protection et des moyens (F16, F18) de production d'un signal d'alarme et/ou de déclenchement lorsque la valeur représentative de l'image thermique excède le seuil de protection, relais **caractérisé en ce qu'**une image thermique initiale non nulle ($E_{s0}$) est prise en compte pour la détermination de l'image thermique, la valeur de l'image thermique initiale étant déterminée à partir de courbes de tenue thermique expérimentales ($C_{f2m}$, $C_{c2m}$; $C_{f3m}$, $C_{c3m}$) de l'appareil.

2. Relais selon la revendication 1, **caractérisé en ce que** le seuil de protection étant un seuil de déclenchement, le temps de déclenchement à froid t du relais est donné par l'équation :

$$\frac{t}{\tau} = \log \frac{\left(\left(\frac{I_{eq}}{I_b}\right)^2 - E_{s0}\right)}{\left(\left(\frac{I_{eq}}{I_b}\right)^2 - E_{sd}\right)}$$

dans laquelle :

$\tau$ est la constante de temps du relais
$I_b$ est le courant de base de l'appareil
$I_{eq}$ est un courant équivalent représentatif du courant mesuré
$E_{s0}$ est l'image thermique initiale
$E_{sd}$ est le seuil de déclenchement

3. Relais selon la revendication 2, **caractérisé en ce que** l'image thermique initiale Es0 est déterminée selon l'équation :

$$E_{s0} = \left(\frac{I_r}{I_b}\right)^2 - e^{\frac{t_r}{\tau 1}} \bullet \left[\left(\frac{I_r}{I_b}\right)^2 - E_{sd}\right]$$

dans laquelle :

$I_b$ est le courant de base de l'appareil
$I_r$ est un courant de réglage prédéterminé
$t_r$ est un temps de déclenchement à froid désiré associé au courant de réglage $I_r$.
$\tau_1$ est une constante de temps d'échauffement, déterminée à partir d'une courbe de tenue thermique à chaud expérimentale de l'appareil.

**4.** Relais selon l'une quelconque des revendications 1 à 3, **caractérisé en ce qu'**il comporte des moyens (F12) de mesure de la température ambiante ($\theta_a$) et des moyens (F13, F 14) de correction de la valeur ($E_k$) représentative de l'image thermique en fonction de la température ambiante mesurée.

**5.** Relais selon l'une quelconque des revendications 1 à 3, **caractérisé en ce que**, l'appareil étant constitué par un moteur et les constantes de temps ($\tau_1$, $\tau_2$), le seuil d'alarme ($E_{sa}$) et/ou de déclenchement ($E_{sd}$) et l'image thermique initiale ($E_{s0}$) constituant un jeu de paramètres du relais, le relais comporte des moyens (F4) de comparaison du courant mesuré ($I_{eq}$) et d'un seuil de courant ($I_s$) représentatif d'un état bloqué du rotor du moteur et des moyens (F5, F6) de sélection d'un premier jeu de paramètres lorsque le courant mesuré ($I_{eq}$) est inférieur au seuil de courant ($I_s$) et d'un second jeu de paramètres lorsque le courant mesuré ($I_{eq}$) est supérieur au seuil de courant ($I_s$).

**Claims**

**1.** A thermal protection relay (1) designed to protect an electrical apparatus (2) comprising means (3) for measuring a current absorbed by the apparatus, means for determining a value ($E_k$) representative of the thermal image of the apparatus according to the value ($I_{eq}$) of the measured current, to a previous value ($E_{k-1}$) of the thermal image and to at least one preset time constant ($\tau_1$, $\tau_2$), means (F5, F6) for determining at least one protection threshold ($E_{sa}$, $E_{sd}$), means (F15, F17) for comparing the value ($E_k$) representative of the thermal image with the protection threshold and means (F16, F18) for producing an alarm and/or tripping signal when the value representative of the thermal image exceeds the protection threshold, a relay **characterized in that** a non-zero initial thermal image ($E_{s0}$) is taken into account for determining the thermal image, the value of the initial thermal image being determined from experimental thermal resistance curves ($C_{f2m}$, $C_{c2m}$; $C_{f3m}$, $C_{c3m}$) of the apparatus.

**2.** The relay according to claim 1, **characterized in that** the protection threshold being a tripping threshold, the cold tripping time t of the relay is given by the equation:

$$\frac{t}{\tau} = \log \frac{\left( \left( \frac{I_{eq}}{I_b} \right)^2 - E_{s0} \right)}{\left( \left( \frac{I_{eq}}{I_b} \right)^2 - E_{sd} \right)}$$

in which:

$\tau$ is the time constant of the relay
$I_b$ is the base current of the apparatus
$I_{eq}$ is an equivalent current representative of the measured current
$E_{s0}$ is the initial thermal image
$E_{sd}$ is the tripping threshold.

**3.** The relay according to claim 2, **characterized in that** the initial thermal image Es0 is determined according to the equation:

$$E_{s0} = \left( \frac{I_r}{I_b} \right)^2 - e^{\frac{t_r}{\tau_1}} \bullet \left[ \left( \frac{I_r}{I_b} \right)^2 - E_{sd} \right]$$

in which:

Ib is the base current of the apparatus

Ir is a preset setting current

tr is a required cold tripping time associated to the setting current Ir

$\tau_1$ is a heating time constant determined from an experimental hot thermal resistance curve of the apparatus.

4.  The relay according to any one of the claims 1 to 3, **characterized in that** it comprises means (F12) for measuring the ambient temperature ($\theta_a$) and means (F13, F14) for correcting the value ($E_k$) representative of the thermal image according to the ambient temperature measured.

5.  The relay according to any one of the claims 1 to 3, **characterized in that**, the apparatus being constituted by a motor and the time constants ($\tau_1$, $\tau_2$), alarm threshold ($E_{sa}$) and/or tripping threshold ($E_{sd}$) and initial thermal image ($E_{s0}$) constituting a set of parameters of the relay, the relay comprises means (F4) for comparing the measured current ($I_{eq}$) and a current threshold ($I_s$) representative of a blocked state of the motor rotor and means (F5, F6) for selecting a first set of parameters when the measured current ($I_{eq}$) is lower than the current threshold ($I_s$) and for selecting a second set of parameters when the measured current ($I_{eq}$) is higher than the current threshold ($I_s$).

**Patentansprüche**

1.  Thermisches Schutzrelais (1) zum Schutz eines elektrischen Geräts (2), welches Relais Mittel (3) zur Messung eines von dem Gerät aufgenommenen Stroms, Mittel zur Bestimmung eines Wertes ($E_k$), der das Wärmebild des Geräts in Abhängigkeit vom Wert ($I_{eq}$) des gemessenen Stroms, von einem vorausgehenden Wert ($E_{k-1}$) des Wärmebilds sowie von mindestens einer bestimmten Zeitkonstante ($\tau_1$, $\tau_2$) abbildet, Mittel (F5, F6) zur Bestimmung mindestens eines Schutzansprechwerts ($E_{sa}$, $E_{sd}$), Mittel (F15, F17) zum Vergleich des das Wärmebild abbildenden Werts ($E_k$) mit dem Schutzansprechwert sowie Mittel (F16, F18) umfasst, die ein Alarm- und/oder Auslösesignal erzeugen, wenn der das Wärmebild abbildende Wert den Schutzansprechwert überschreitet, **dadurch gekennzeichnet, dass** zur Bestimmung des Wärmebilds ein Anfangswärmebild ungleich null ($E_{s0}$) verwendet wird, wobei der Wert des Anfangswärmebilds aus experimentell ermittelten Wärmeverlaufskürven des Geräts ($C_{f2m}$, $C_{c2m}$; $C_{f3m}$, $C_{c3m}$) gewonnen wird.

2.  Relais nach Anspruch 1, **dadurch gekennzeichnet, dass** der Schutzansprechwert einen Auslöseschwellwert darstellt, wobei sich die Kaltauslösezeit des Relais aus der Gleichung

$$\frac{t}{\tau} = \log \frac{\left( \left( \frac{I_{eq}}{I_b} \right)^2 - E_{s0} \right)}{\left( \left( \frac{I_{eq}}{I_b} \right)^2 - E_{sd} \right)}$$

ergibt, in der

$\tau$ = Zeitkonstante des Relais,

$I_b$ = Basisstrom des Geräts,

$I_{eq}$ = den gemessenen Strom abbildender Ersatzstrom,

$E_{s0}$ = Anfangswärmebild,

$E_{sd}$ = Auslöseschwellwert.

3.  Relais nach Anspruch 2, **dadurch gekennzeichnet, dass** das Anfangswärmebild Es0 über die Gleichung

$$E_{s0} = \left(\frac{I_r}{I_b}\right)^2 - e^{\frac{t_r}{\tau 1}} \bullet \left[\left(\frac{I_r}{I_b}\right)^2 - E_{sd}\right]$$

bestimmt wird, in der

$I_b$ = Basisstrom des Schaltgeräts,

$I_r$ = bestimmter Einstellstromwert,

$t_r$ = dem Einstellstromwert $I_r$ zugeordnete, gewünschte Kaltauslösezeit,

$\tau_1$ mit Hilfe einer experimentell ermittelten Wärmeverlaufskennlinie des Geräts bestimmte Erwärmungs-Zeitkonstante.

4. Relais nach irgendeinem der Ansprüche 1 bis 3, **dadurch gekennzeichnet, dass** es Mittel (F12) zur Messung der Umgebungstemperatur ($\theta_a$) sowie Mittel (F 13, F 14) zur Korrektur des das Wärmebild abbildenden Wertes ($E_k$) in Abhängigkeit von der gemessenen Umgebungstemperatur umfasst.

5. Relais nach irgendeinem der Ansprüche 1 bis 3, **dadurch gekennzeichnet, dass** das Gerät ein Motor ist und die Zeitkonstanten ($\tau_1$ $\tau_2$), der Alarm- ($E_{sa}$) und/oder Auslöseschwellwert ($E_{sd}$) sowie das Anfangswärmebild ($E_{s0}$) einen Satz von Relaisparametern bilden und dass das Relais Mittel (F4) zum Vergleich des gemessenen Stroms ($I_{eq}$) mit einem, einen blockierten Zustand des Motorläufers abbildenden Stromschwellwert ($I_s$) sowie Auswahlmittel (F5, F6) umfasst, die einen ersten Parametersatz auswählen, wenn der gemessene Strom ($I_{eq}$) unter dem Stromschwellwert (Is) liegt, und einen zweiten Parametersatz auswählen, wenn der gemessene Strom ($I_{eq}$) über dem Stromschwellwert ($I_s$) liegt.

Fig. 1 (Art antérieur)

Fig. 2 (Art antérieur)

Fig. 3 (Art antérieur)

Fig. 4

Fig. 5

Fig. 6

de F10

$E_k = Max(E_k; E_{s0})$ — F11

Mesure de $\theta_a$ — F12

Calcul de $f_{Cor}$ — F13

$E_c = E_k \cdot f_{Cor}$ — F14

— F15
$E_c > E_{sa}$ ? — NON
OUI

— F16
Alarme

— F17
$E_c > E_{sd}$ ? — NON
OUI

— F18
Déclenchement

$k = k + 1$ — F19

vers F2

Fig. 7

Fig. 8 (art antérieur)

**EP 1 107 416 B1**

**RÉFÉRENCES CITÉES DANS LA DESCRIPTION**

**Documents brevets cités dans la description**

- EP 0866485 A